# EUROPÄISCHE PATENTSCHRIFT

(11) **EP 3 297 960 B1**
(45) Veröffentlichungstag und Bekanntmachung des Hinweises auf die Patenterteilung: **15.09.2021**
(21) Anmeldenummer: 16725782.3
(22) Anmeldetag: 10.05.2016
(51) Int. Cl.: C02F 11/02, C02F 3/30, C05F 17/00

(54) **VERFAHREN ZUR ANREICHERUNG VON PHOSPHOR IM KLÄRSCHLAMM**
PROCESS FOR PHOSPHORUS ENRICHMENT OF CLARIFIED SLUDGE
PROCÉDÉ POUR ENRICHIR LE PHOSPHORE DANS DES BOUES D'ÉPURATION

(30) Priorität: 18.05.2015 DE 102015107749
(43) Veröffentlichungstag der Anmeldung: 28.03.2018
(73) Patentinhaber: Markgraf, Hannelore, 38459 Mackendorf (DE)
(72) Erfinder: Markgraf, Hannelore, 38459 Mackendorf (DE)
(74) Vertreter: Gulde & Partner
(86) Internationale Anmeldenummer: PCT/EP2016/060460
(87) Internationale Veröffentlichungsnummer: WO 2016/184730

(56) Entgegenhaltungen:
- EP-A1- 0 087 128
- EP-A1- 1 376 276
- EP-B1- 2 532 403
- WO-A1-2004/005201
- DE-U1- 29 618 687
- US-A1- 2004 087 011
- US-B2- 7 326 343

## Beschreibung

Die Erfindung betrifft ein Verfahren zur Anreicherung von Phosphor bzw. Phosphaten aus Klärschlamm mit Dickstoffen aus Abwasser, wobei unter gleichzeitiger Entwässerung und Stabilisierung des Klärschlamms eine biologische Phosphatanreicherung im Klärschlamm ex *situ* des Abwasserstroms erfolgt.

Phosphat ist ein nicht substituierbarer Nährstoff, um die Bodenfruchtbarkeit und damit die landwirtschaftliche Produktion zu erhalten. Somit ist Phosphat ein elementarer Rohstoff für die Ernährungssicherheit weltweit. Phosphate gehören zu der Gruppe der nicht erneuerbaren Rohstoffe. Gleichsam zählt Phosphat nach Stickstoff zu dem mengenmäßig zweitwichtigsten Nährstoff. Nach herrschender Meinung sind die natürlichen Phosphatvorkommen nur noch begrenzt verfügbar. Hinsichtlich der genauen Reichweite der Phosphat-Vorkommen sind die Schätzungen der Experten noch uneinheitlich.

Die Landwirtschaft ist auf phosphorhaltige Düngemittel angewiesen. Es wird in der längerfristigen Betrachtung zu Engpässen bei der Versorgung mit Rohphosphaten und zu Preissteigerungen kommen. Vor diesem Hintergrund werden weltweit alternative Techniken gesucht, um Sekundärquellen zur Gewinnung von Phosphor nutzen zu können. Hier kommt die Eigenschaft von Phosphor zum Tragen, dass Phosphor beliebig oft wieder verwendbar ist, da es keiner Abnutzung unterliegt.

Da die größten P-Verluste in den Stoffkreisläufen Abwasser, Klärschlamm und tierische Nebenprodukte zu verzeichnen sind, setzen hier Konzepte zur P-Rückgewinnung an. Klärschlämme sind phosphorreiche organische Düngemittel. So enthält der Klärschlamm z. B. in Deutschland theoretisch rund 20% der Menge an Phosphor, die jährlich in der Landwirtschaft genutzt wird.

Gegenwärtig liegt die Fokussierung von technischen P-Recyclingverfahren auf der Gewinnung aus Abwasser und Klärschlammaschen. Die direkte Verwertung qualitativ hochwertiger Klärschlämme ist jedoch gleichrangig mit den technischen Recyclingverfahren aus Klärschlammaschen oder der P-Fällung aus dem Abwasserstrom zu behandeln.

In Deutschland werden jährlich ca. 44.000 t P₂O₅ durch die stoffliche Verwertung von Klärschlamm direkt recycelt. Durch den Ausbau der Abwasserreinigungsleistung in Kläranlagen sind die P-Gehalte in kommunalen Klärschlämmen in den letzten Jahren auf Größenordnungen von 6-10 % P₂O₅ in der Trockenmasse gestiegen. Die Akzeptanz von Klärschlamm ist bei den Branchenprofis (Landwirte, Verwerter, Behördenvertreter) ausgezeichnet. Bundesweit übersteigt die Nachfrage nach Klärschlamm zu Düngungszwecken und als Humuslieferant in vielen Regionen das regionale Angebot.

Klärschlamm oder Aufbereitungsprodukte aus Klärschlamm enthalten ca. 60 % organische Substanz und können somit einen wesentlichen positiven Beitrag zur Humusbilanz leisten. Wichtige physikalischen Kenngrößen des Bodens (Porenvolumen, Feldkapazität, Aggregatstabilität auf einem Kippenboden) konnten nach mehrmaligen Klärschlammgaben nachweislich verbessert werden.

Nach aktuellem Stand der Technik kann Phosphor mit verschiedenen Verfahren wiedergewonnen werden.

Neben biologischen Verfahren (z.B. Gujer, Willi (2007), Siedlungswasserwirtschaft, 3. Auflage, Berlin: Springer (Springer Verlag Berlin Heidelberg), S. 359 ff.), bei denen die P-Rückgewinnung aus Abwasser durch Bakterien *in situ,* d. h. innerhalb der (Ab-)Wasserzone erfolgt, existieren chemische Verfahren und thermische Verfahren nach Monoverbrennung. Mittels chemischer Verfahren erfolgt eine P-Rückgewinnung aus Abwasser durch Ausfällung, durch Kristallisation oder aus (ausgefaulten) Klärschlämmen (z. B. DE 10 2005 002 066 B4). Bekannte thermische Verfahren ermöglichen die P-Rückgewinnung aus Klärschlammaschen oder aus Klärschlamm-Briketts; Mephrec-Prozess (z. B. DE 10 2013 103 770 A1).

Die biologischen Verfahren zur Phosphor-Elimination unterteilen sich in zwei Verfahren. Zum einen gibt es die "natürliche" biologische Phosphor-Elimination (kurz: Bio-P) bei der keine gezielten verfahrenstechnischen Maßnahmen angewendet werden. Die P-Elimination erfolgt durch Polyphosphat-akkumulierende Organismen (PAO, z. B. Bakterien der Gattung Acinetobacter). Rund 20-30 % des Phosphors werden in die Biomasse eingebaut, an Belebtschlammflocken adsorbiert oder biogen gefällt und können mit dem Überschussschlamm aus dem Abwasser entfernt werden.

Zum anderen gibt es "Verfahren der erhöhten Phosphoraufnahme", die dadurch charakterisiert sind, dass die PAOs einem Wechsel zwischen anaeroben/substratreichen und aeroben/substratarmen Phasen durch aktive verfahrenstechnische Maßnahmen ausgesetzt sind. In der anaeroben Phase werden die Polyphosphat-speichernden Bakterien unter Stress gesetzt und geben die in ihren Zellen eingelagerten Phosphate ab, so dass es zu einem Anstieg der Phosphatkonzentration im anaeroben Bereich kommt. Gleichzeitig wandeln die Bakterien organische Säuren um (vor allem in Poly-ß-hydroxy-Fettsäuren), die als Energielieferant in der Zelle gespeichert werden. Durch einen nachfolgenden Wechsel in den aeroben Bereich, werden die innerhalb der Zelle gespeicherten Poly-ß-hydroxy-Fettsäuren als zusätzliche Kohlenstoffsubstrate verwertet, was die vermehrte Speicherung von Phosphat in Form von Polyphosphat ermöglicht. Das heißt, wenn die Mikroorganismen dann in den aeroben Lebensbereich gelangen, nehmen sie das zuvor gelöste Phosphat wieder auf und lagern noch weitere Phosphate ein, was u.a. durch ein vermehrtes Zellwachstum unterstützt wird. Dadurch sinkt dann der Gesamt-Phosphatgehalt im Wasser.

Der Prozess findet innerhalb der Wasserzone *(in situ)* statt und maximal 90 % Phosphor kann so eliminiert werden. Nachteilig ist, dass, um das Verfahren technisch umzusetzen, eine Anordnung eines oder mehrerer Becken mit aeroben und anaeroben Zonen notwendig ist, was Flächenkapazitäten und Kapital bindet. Zudem ist zum Transport des Abwassers und der zu transportierenden Schlämme ein erhebliches Maß an Prozessenergie aufzuwenden.

Weil der Bio-P-Prozess empfindlich ist, werden in den meisten Kläranlagen chemische und biologische Phosphorelimination kombiniert, wobei insbesondere Fällungsverfahren angewandt werden. Die Fällmittel sind vielfach Neben- oder Abfallprodukte großtechnischer Prozesse. Daher können Verunreinigungen auftreten. Es ist davon auszugehen, dass die Verunreinigungen in den Fällungsschlamm aufgenommen werden und sich dadurch die Frachten im anfallenden Klärschlamm erhöhen, was in hohem Maße unerwünscht ist.

WO 2004/005201 A1 offenbart ein Verfahren zur Entwässerung von Schlämmen, das das Absetzen des Schlamms und seine Entwässerung in verschiedenen Zonen desselben Reaktors vorsieht. Vor Ablauf in die weitere Wasserbehandlung erfolgt eine Phosphatfällung mittels handelsüblichen Fällmitteln. Ein ähnlicher Aufbau ist in DE 296 18 687 U1 beschrieben.

Aus EP 2 532 403 B1 ist eine Anlage zur Entwässerung von Klärschwämmen bzw. Dickstoffen bekannt, bei der abgesetzte Schlamm aus einem Absetzbehälter in einen Entwässerungsbehälter gefördert wird. Das Wasser wird aus dem Entwässerungsbehälter in den Absetzbehälter zurückgeführt.

Der Erfindung lag nun die Aufgabe zugrunde, nach Verfahren zu suchen, die belastende Zusatzstoffe vermeiden und effektiv und kostengünstig eine verbesserte Phosphateliminierung aus dem Abwasser und P-Anreicherung im Klärschlamm bzw. Dickstoffen gestatten.

Diese Aufgabe wird durch Verfahren zur Anreicherung von Phosphor mit den Merkmalen des Anspruchs 1 gelöst.

Das erfindungsgemäße Verfahren zur Anreicherung von Phosphor aus Klärschlämmen mit Dickstoffen aus Abwasser unter Verwendung von Kläranlagen, die einen Dickstoffabzug ermöglichen, umfasst die Behandlung und den Transport von Klärschlämmen und Dickstoffen in einem anaeroben Bereich von Kläranlagen, das heißt *in situ,* und anschließend den Transport in einen aeroben Bereich und dortige Behandlung, also *ex situ,* unter Verwendung eines biologischen Mikrofilters. Der Prozess wird im *in situ* und *ex situ* Bereich unter Analyse der Zulaufwerte des Abwassers und Messung der Filterleistung des biologischen Mikrofilters aktiv gesteuert.

Der Phosphor wird durch eine bestimmte Vorbereitung des Klärschlamms in der Wasserzone, durch definierte Zuführung und Filterung durch einen Mikrobiofilter in einer entsprechenden Vorrichtung, einem Separator, der sich außerhalb der Wasserzone befindet, in beachtlicher Weise zurückgehalten, wodurch eine Anreicherung an Phosphor/Phosphat in entwässertem Klärschlamm erfolgt.

Gegenstand der Erfindung ist deshalb ein Verfahren zur Anreicherung von Phosphor in Klärschlamm aus Abwasser, wobei unter gleichzeitiger Entwässerung und Stabilisierung des Klärschlammes eine biologische Phosphatanreicherung im Klärschlamm *ex situ* des Abwasserstroms erfolgt.

Das erfindungsgemäße Verfahren zur Anreicherung von Phosphor unter Behandlung von Klärschlämmen einschließlich Dickstoffen aus Abwasser ist grundsätzlich mit jeder an sich bekannten Kläranlage realisierbar, die einen Dickstoffabzug ermöglicht, und umfasst bevorzugt die folgenden Schritte:
a) anaerobe Behandlung von Klärschlämmen aus Abwasser in einem anaeroben Bereich der Kläranlage innerhalb des Abwasserstroms *(in situ),* wobei sich Dickstoffe oder Schlamm in einer unteren Zone absetzen;
b) Abzug von abgesetztem Schlamm und Transport in mindestens einen Separator, der sich außerhalb des Abwasserstroms (*ex situ)* befindet und einen aus einem Natursubstrat oder einem anderen Filtermaterial gebildeten biologischen Mikrofilter umfasst, der an einer perforierten Außenfläche des Innenbehälters fixiert ist, und der weiterhin einen Ab-/Rücklauf zur Entwässerung der Stoffe und Zurückhaltung von mit Phosphor angereicherten Bakterien durch den biologischen Mikrofilter aufweist,
c) aerobe Behandlung des überführten Schlammes im Separator^, vorzugsweise durch zusätzliche Luftzufuhr,
d) aktive Prozesssteuerung durch Analyse der Zulaufwerte für Inhaltsstoffe und Volumina im Zeitablauf des Abwassers im anaeroben Bereich der Kläranlage *(in situ),* und abgeleitet aus der Analyse der Zulaufwerte aktive Steuerung der Verweilzeiten des Klärschlamms in der Kläranlage und der Volumina des aus der unteren Zone des anaeroben Bereichs abgezogenen und in einen oder mehrere Separatoren überführten Schlamms , sowie
e) aktive Prozesssteuerung der Filterleistung im Separator (*ex situ)* durch Messung und Analyse der Wasserstände und Volumina der Schwimmschicht und der Indikatoren zur Beurteilung der Leistungsfähigkeit der Bakterien und daraus abgeleitet eine aktive Sauerstoffzufuhrregelung.

Im Falle mehrerer Separatoren umfasst die aktive Steuerung vorzugsweise ferner eine aktive Auswahl von zur Verfügung stehenden freien Separatoren für eine jeweils nächste Beschickung mit Klärschlamm aus dem anaeroben Bereich.

Die Bezeichnung abgesetzter Schlamm schließt abgesetzte Dickstoffe ein.

Die anaerobe Zone bildet z. B. die Vorklärung einer Kläranlage und kann ein Absetzbecken oder Absetzbehälter sein. Dieser Zone läuft Abwasser zu. Die Verweilzeit des im Abwasser enthaltenen Klärschlamms richtet sich nach den Betriebsbedingungen der Kläranlage. Normalerweise beträgt die Verweilzeit vorzugsweise 0,5 bis 2 h. Bekanntermaßen setzt sich in der Vorklärung der Primärschlamm am Boden ab. Aufgrund des anaeroben Habitats werden die Phosphat speichernden Bakterien unter Stress gesetzt. In den unteren Schichten des Schlamms befinden sich aufgrund der längeren Verweilzeit die höchsten Konzentrationen an gestressten Bakterien und gelösten Phosphaten.

Der abgesetzte Schlamm (inklusive gelöster Phosphate) wird, bevorzugt aus den unteren Schichten dieser Zone (der Vorklärung), abgezogen und vorzugsweise in den Bodenbereich eines Behälters - des so genannten Separators - transportiert mit anschließender Beaufschlagung der Schwimmschicht durch die zersetzten Dickstoffe von unten. Der Separator befindet sich außerhalb der Wasserzone (*ex situ)* und bildet eine aerobe Zone. Hierbei wird vorzugsweise der gesamte abgesetzte Schlamm abgezogen.

In einer bevorzugten Variante wird der Klärschlamm ein- bis mehrmals pro Tag mit einem Dickstoffheber durch Luft in den Separator befördert. Die Lufteinspeisung in den Dickstoffheber erfolgt durch einen elektronisch steuerbaren Kompressor, so dass neben der Beförderung von abgesetztem Schlamm als Nebeneffekt der eingesetzten Luft-Beförderungs-Technik eine Belüftung des Separators erfolgt. Die Zuführung des Klärschlamms in den Separator kann alternativ durch Pumpen erfolgen. Die Auswahl der Fördertechnik richtet sich nach den Gegebenheiten der jeweiligen Kläranlage.

Unabhängig von der Fördertechnik kann dem (Separator-)Behälter zur aeroben Behandlung des Klärschlamms - vorzugsweise intervallweise - zusätzlich Luft zugeführt werden. Die Intervalle richten sich im Prinzip nach der angefallenen Menge an entwässertem Schlamm und der Größe des Separators. Technisch erfolgt die Luftzuführung vorzugsweise durch einen elektronisch steuerbaren Kompressor. Diese zusätzliche Beaufschlagung mit Luft kann vorzugsweise über eine Zuleitung am Boden und/oder seitlich am Innenbehälter des Separators erfolgen.

Durch den Wechsel des Milieus wandeln die Bakterien die gespeicherte Energie um und nehmen im Anschluss Phosphor aus dem Klärschlamm auf. Der biologische Mikrofilter im Separator bildet eine mikrofeine Filterschicht, wodurch ein Rückfluss von mit Phosphor angereicherten Bakterien weitestgehend verhindert wird. Gleichzeitig wird der Klärschlamm über einen Abfluss im Behälter entwässert. Der Abfluss ist so angeordnet, dass eine Entwässerung vorzugsweise kontinuierlich gewährleistet ist.

Bevorzugt ist der Separator ein topfförmiger, runder oder mehreckiger Behälter, der einen Innenbehälter mit perforierten Außenflächen aufweist. Die Behälterteile können vorzugsweise zerlegbar sein. Im Innenbehälter befindet sich an den perforierten Außenflächen ein FilterMantel aus Natursubstrat - vorzugsweise aus Holzhackschnitzeln. Die bevorzugt verwendeten Holzhackschnitzel sind vorzugsweise durch Siebe an den perforierten Außenflächen des Innenbehälters und am Boden fixiert.

Durch die aktive Prozesssteuerung (in und zwischen der Vorklärung und dem Separator) und die bevorzugte Luftzuführung werden weitestgehend Faulprozesse vermieden und es können sich maximale Bakterienmilieus entwickeln. Die hochaktiven Bakterien sind dann in der Lage, den Zersetzungsprozess der Dickstoffe mit ihrer Beaufschlagung der Schwimmschicht von unten zu beschleunigen. Weiterhin sind die Bakterien - vor allem unterstützt durch Massewachstum - jetzt so leistungsfähig, dass sie den Natursubstratfilter als Mikrofilter aufbauen und über die gesamte Befüllzeit funktionsfähig offen halten. Damit liegt im Separator ein biologischer Mikrofilter oder Biofilter vor, welcher nicht mehr technisch gereinigt werden muss.

Das den Biofilter bildende Natursubstrat weist eine Filterstärke auf, die vom verwendeten Material abhängig ist, und besitzt vorzugsweise eine Dicke, die sich über die gesamte Filterfläche erstreckt und bildet so im Separator einen Filtermantel an den perforierten Außenflächen des Innenbehälters, vorzugsweise fixiert mittels Sieben.

Besonders vorteilhaft im erfindungsgemäß eingesetzten Biofilter ist feineres Natursubstrat - vorzugsweise aus Holzhackschnitzeln - und zusätzlich die Vergrößerung der Filterfläche durch Vergrößerung des Innenbehälters in Kombination mit einer optimierten Filterstärke, die von dem verwendeten Filtermaterial abhängig ist. Mit dem erfindungsgemäßen Verfahren kann vorzugsweise im Laufe des Tages der gesamte anfallende abgesetzte Klärschlamm in vorzugsweise einem oder mehreren Separatoren *ex situ* entwässert und stabilisiert werden.

Der Abzug oder die Zuführung des Klärschlamms erfolgt vorzugsweise diskontinuierlich und damit chargenweise.

Das heißt, das Verfahren kann unter Verwendung eines Separators oder mehrerer Separatoren erfolgen. Das hängt u. a. von der Schlammmenge, Konsistenz des Schlamms, der Dimensionierung der Separatoren, der Schlammtemperatur etc. ab. Die Behälter sind dann so angeordnet, dass sie unabhängig voneinander angesteuert werden können, so dass sich in jedem Behälter das optimale Bakterienmilieu für den Biofilter steuern lässt.

Durch die bevorzugte Intervall-Steuerung sowie eine optimierte Anordnung eines oder mehrerer Separatoren wird eine biologische Phosphor-Elimination aus dem Abwasser von bis zu 90 % erreicht. Die Eliminationsleistung wird als Differenz der Phosphor-Konzentration im Zulauf (= 100%) und der Phosphor-Konzentration im Ablauf (= x%) ermittelt.

Der mikrofeine Biofilter gestattet simultan die Entwässerung des Klärschlamms bis zu 30 % TS. Die Konzentration von Klärschlämmen wird üblicherweise als Trockensubstanzgehalt - mit Abkürzung TS - angegeben. Pumpbare Schlämme haben i.d.R. 5% bis 15% TS. Klärschlämme mit TS 30% sind im Allgemeinen bereits stichfest. Weder für die P-Anreicherung noch für die Entwässerung sind Zusatzstoffe (wie z. B. Fällungsmittel oder Polymere) notwendig.

Weiterhin wird durch die sofortige Entwässerung des Klärschlammes im Separator die organische Fracht des Klärschlamms stabilisiert, so dass Faulprozesse im aeroben Milieu weitestgehend verhindert werden können. Der Rücklauf des Filtratwassers erfolgt kontinuierlich, so dass keine Probleme durch "Brüden" entstehen.

Das erfindungsgemäße Verfahren zur erhöhten Aufnahme von Phosphor ist in seiner einfachsten Form durch das beschriebene Zwei-Stufen-Modell charakterisiert. Komplexe Modelle mit Nachklärung und Belebtschlamm-Zuführung sind ebenfalls möglich. Die Komplexität der Kläranlagen nimmt grundsätzlich mit ihrer Größe - ausgedrückt durch die Reinigungsleistung in EGW - zu. Aufgrund der Vielzahl verschiedener Anordnungen ist eine differenzierte Betrachtungsweise für jede Kläranlage notwendig.

Das Verfahren ist beliebig skalierbar. So ist dieses Verfahren auch in kleinstem Maßstab (ab 1 EGW) ohne Probleme anwendbar.

Für dieses Verfahren ist - im Vergleich zu den Belebungsbecken - ein relativ kleiner Behälter als Separator notwendig. Zudem wird für diesen Prozess keine Prozessenergie benötigt, was zu erheblichen Kosteneinsparungen und einer verbesserten CO₂-Bilanz führt. Dabei ist der wesentliche Unterschied zum Stand der Technik, dass die Phosphor-Aufnahme durch die Bakterien außerhalb der Wasserzone erfolgt. Durch diesen wesentlichen Unterschied kann erheblich Energie eingespart werden, da innerhalb der Wasserzone viel Energie aufgewendet werden muss, um aerobe Habitate für die Bakterien zu schaffen. Das geschätzte Energieeinsparungspotenzial liegt bei bis zu 50% im Vergleich mit einer Kläranlage mit simultaner Belebung.

Weiterhin werden für das Verfahren vorzugsweise keinerlei chemischen Zusatzstoffe benötigt. Das erzeugte Produkt ist ein mit bis zu 30% TS entwässerter Klärschlamm, der als Vorrottegemisch zur weiteren Verarbeitung (vorzugsweise Hygienisierung und Trocknung mit > 80 % TS durch Kompostierung) zur Verfügung steht. In dem Klärschlammkompost befinden sich keine chemischen Zusatzstoffe. Der im Klärschlamm befindliche Phosphor ist voll pflanzenverfügbar.

Die Verwertung des P-angereicherten Klärschlamms kann dual erfolgen - vorzugsweise stofflich aber auch thermisch -je nach Qualität. Die Qualität lässt sich durch den Vergleich mit den jeweils aktuellen Grenzwerten für die Inhaltsstoffe bestimmen.

Als Separator, mit dem *ex situ* eine ausschließlich biologische P-Anreicherung im Klärschlamm erzielt werden kann, wird mindestens ein Behälter bereitgestellt, mit dem drei wesentliche Prozesse der Klärschlammbehandlung simultan, vorzugsweise ohne Prozessenergie und ohne Zusatz von chemischen Zusatzstoffen realisiert werden, nämlich Entwässerung, Stabilisierung und P-Anreicherung. Dieser Separator kann auch als transportable Vorrichtung in Form eines Container-Systems errichtet werden.

Des Weiteren dient der Separator auch als ein Klärschlammspeicher. Je nach Dimensionierung können vorzugsweise bis zu einem Jahr die entwässerten Dickstoffe ohne Geruchsbelästigung gespeichert werden, da in einer bevorzugten Ausführung ein Vollemissionsschutz durch den mechanischen Biofilter mit einem Natursubstrat, wie Holzhackschnitzel (durch den je nach Aufbau der Anlage die Luft eingespeist wird und/oder die Abluft gefiltert wird) gegeben ist.

Eine Separatorenanordnung zur *ex situ* Anreicherung von Phosphor in entwässerten Klärschlämmen mit Dickstoffen umfasst einen oder mehrere Separatoren, die sich hinsichtlich ihrer Größe und Anzahl aus der Analyse der Klärschlammzufuhr (der Zulaufwerte für Inhaltsstoffe und Volumina im Zeitablauf des Abwassers) und der notwendigen biologischen Filterzeit des Klärschlamms mit dem Ziel der vermehrten Anreicherung des zurückgehaltenen Schlamms mit Phosphor, ergeben. Die Innenwände an den perforierten Außenflächen können mit Sieben zur Fixierung des Natursubstrates ausgerüstet sein. In einer anderen Ausführung können die Innenwände doppelwandig gestaltet sind, um im Zwischenraum der beidseitig perforierten Innenwandflächen das Natursubstrat zu fixieren.

Vorzugsweise werden mehrere Separatoren verwendet, so dass in Auswertung der Filterleistung zur Verfügung stehende freie Separatoren für eine jeweils nächste Beschickung mit Klärschlamm aus der anaeroben Zone der Kläranlage genutzt werden können.

Als besonders bevorzugt hat sich ein aus EP 2 532 403 B1 bekannter Separator (MUTEC-Separator genannt) erwiesen, der mit einem Innenbehälter ausgestattet ist an dessen perforierten Außenflächen sich das Natursubstrat wie oben beschrieben, befindet. Abgesetzte Schlämme und Dickstoffe werden aus Absetzbecken bzw. -behältern durch Druckluft oder mit einer Pumpe aus einem Becken bzw. einem Behälter abgezogen und dann dem Separator zur Trennung von Feststoffen und Abwasser zugeführt. Das sich im Bodenbereich des Separators sammelnde Rücklaufwasser wird mittels einer entsprechenden Ableitung wieder dem Absetzbehälter zugeleitet. Klärschlamm wird entwässert und stabilisiert -vorzugsweise ohne Prozessenergie und ohne Zusatz von chemischen Zusatzstoffen.

Phosphor kann durch die Vorbereitung des Klärschlamms, die intervallgesteuerte Zuführung und Filterung durch den zusätzlichen Mikro-Biofilter in beachtlicher Weise im so genannten MUTEC-Bio-Separator zurückgehalten werden.

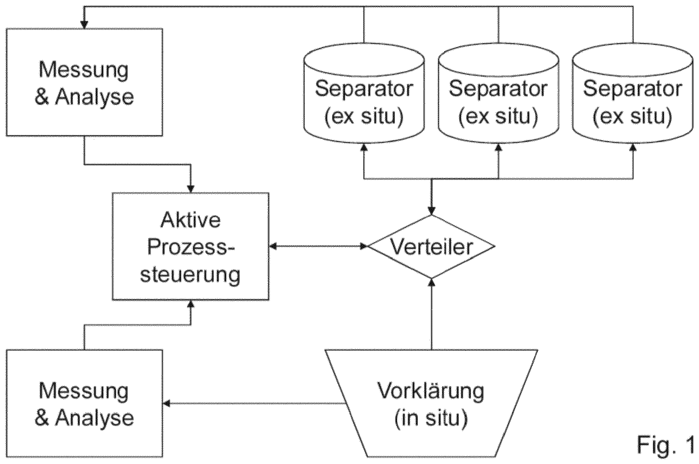

In Figur 1 ist schematisch das erfindungsgemäße Verfahren unter Verwendung mehrerer Separatoren dargestellt.

## Patentansprüche

1. Verfahren zur Anreicherung von Phosphor aus Abwässern, die Dickstoffe enthaltende Klärschlämme enthalten, unter Verwendung einer Kläranlage, umfassend
a) anaerobe Behandlung der Klärschlämme in einem anaeroben Bereich der Kläranlage innerhalb des Abwasserstroms, wobei sich Dickstoffe und Schlamm in einer unteren Zone absetzen,
b) Abzug des abgesetzten Schlamms und Transport in mindestens einen Separator umfassend Außen- und Innenbehälter, wobei sich der Separator außerhalb des Abwasserstroms befindet und einen aus einem Natursubstrat oder einem anderen Filtermaterial gebildeten biologischen Mikrofilter umfasst, der an einer perforierten Außenfläche des Innenbehälters fixiert ist, und der weiterhin einen Ab-/Rücklauf zur Entwässerung der Stoffe und Zurückhaltung von mit Phosphor angereicherten Bakterien durch den biologischen Mikrofilter aufweist,
c) aerobe Behandlung des Schlamms im Separator, vorzugsweise durch zusätzliche Luftzufuhr,
d) aktive Prozesssteuerung durch Analyse der Zulaufwerte für Inhaltsstoffe und Volumina im Zeitablauf des Abwassers im aeroben Bereich der Kläranlage, und abgeleitet aus der Analyse der Zulaufwerte aktive Steuerung der Verweilzeiten des Klärschlamms in der Kläranlage und der Volumina des aus der unteren Zone des anaeroben Bereichs abgezogenen und in einen oder mehrere Separatoren überführten Schlamms, und
e) aktive Prozesssteuerung der Filterleistung im Separator durch Messung und Analyse der Wasserstände und Volumina einer Schwimmschicht und von Indikatoren zur Beurteilung der Leistungsfähigkeit der Bakterien und daraus abgeleitet aktive Sauerstoffzufuhrregelung.

2. Verfahren nach Anspruch 1, wobei im Falle mehrerer Separatoren die aktive Steuerung ferner eine aktive Auswahl von zur Verfügung stehenden freien Separatoren für eine nächste Beschickung mit Klärschlamm aus dem anaeroben Bereich umfasst.

3. Verfahren nach einem der Ansprüche 1 oder 2, **dadurch gekennzeichnet, dass** der abgesetzte Klärschlamm in einen Bodenbereich des mindestens einen Separators transportiert wird und anschließend eine Schwimmschicht innerhalb des Separators durch die sich zersetzten Dickstoffe des Klärschlamms von unten beaufschlagt wird.

4. Verfahren nach einem der Ansprüche 1 bis 3, wobei der biologische Mikrofilter mittels Sieben an den perforierten Außenflächen des Innenbehälters fixiert ist.

5. Verfahren nach einem der Ansprüche 1 bis 4, wobei der biologische Mikrofilter aus Holzhackschnitzeln gebildet ist.

6. Verfahren nach einem der Ansprüche 1 bis 5, **dadurch gekennzeichnet, dass** dem Separator zur aeroben Behandlung des abgesetzten Klärschlamms von unten und/oder seitlich Luft zugeführt wird.

## Claims

1. A method for the accumulation of phosphorus from wastewater containing sewage sludge containing thick matter using a wastewater treatment plant, comprising
a) anaerobically treating the sewage sludge in an anaerobic region of the wastewater treatment plant within the wastewater stream, wherein thick matter and sludge settle in a bottom zone,
b) withdrawing the settled sludge and transporting it into at least one separator comprising outer and inner containers, wherein the separator is located outside of the wastewater stream and comprises a biological microfilter formed from a natural substrate or another filter material, said microfilter being attached to a perforated outer surface of the inner container and further having a drain/return pipe for draining the matter and retaining bacteria enriched with phosphorus by the biological microfilter,
c) aerobically treating the sludge in the separator, preferably by additional air supply,
d) active process control by analyzing the inflow values for contents and volumes of the wastewater over time in the aerobic region of the purification plant, and, derived from the analysis of the inflow values, actively controlling the retaining times of the sewage sludge in the wastewater treatment plant and of the volumes of the sludge withdrawn from the bottom zone of the anaerobic region and transferred into one or several separators, and
e) active process control of the filter performance in the separator by measuring and analyzing the water levels and volumes of a floating layer and of indicators for assessing the performance ability of the bacteria and active oxygen supply control derived therefrom.

2. The method according to Claim 1, wherein, in the case of several separators, the active control further comprises actively selecting available free separators for a next charging with sewage sludge from the anaerobic region.

3. The method according to either one of Claims 1 or 2, **characterized in that** the settled sewage sludge is transported into a bottom region of the at least one separator and subsequently a floating layer within the separator is supplied from below by the disintegrating thick matter of the sewage sludge.

4. The method according to any one of Claims 1 to 3, wherein the biological microfilter is attached to the perforated outer surfaces of the inner container by means of screens.

5. The method according to any one of Claims 1 to 4, wherein the biological microfilter is formed from wood chips.

6. The method according to any one of Claims 1 to 5, **characterized in that** air is supplied to the separator from below and/or laterally for aerobically treating the settled sewage sludge.

## Revendications

1. Procédé d'enrichissement du phosphore issu d'eaux usées, qui contiennent des boues d'épuration renfermant des matières épaisses, à l'aide d'une station d'épuration, comprenant
a) le traitement anaérobie des boues d'épuration dans un secteur anaérobie de la station d'épuration à l'intérieur du flux des eaux usées, dans lequel les matières épaisses et les boues se déposent dans une zone inférieure,
b) l'évacuation des boues déposées et leur transport dans au moins un séparateur comprenant un réservoir extérieur et intérieur, dans lequel le séparateur se trouve en dehors du flux des eaux usées et comprend un microfiltre biologique, constitué d'un substrat naturel ou d'un autre matériau filtrant, qui est fixé à une surface extérieure perforée du réservoir intérieur, et qui présente encore un conduit d'écoulement et de reflux servant au drainage des matières et à la rétention des bactéries enrichies de phosphore par le biais du microfiltre biologique,
c) le traitement aérobie des boues dans le séparateur, de préférence par l'amenée d'air supplémentaire,
d) la commande active de processus par l'analyse des valeurs d'arrivée des composants et des volumes des eaux usées au fil du temps dans le secteur aérobie de la station d'épuration, et, dérivée de l'analyse des valeurs d'arrivée, la commande active des temps de séjour des boues d'épuration dans la station d'épuration et des volumes de boues évacuées de la zone inférieure du secteur anaérobie et transférées dans un ou plusieurs séparateurs, et
e) la commande active de processus de la capacité de filtration dans le séparateur par la mesure et l'analyse des niveaux d'eau et des volumes d'une couche flottante ainsi que des indicateurs servant à évaluer la performance des bactéries et la régulation active de l'apport d'oxygène en découlant.

2. Procédé selon la revendication 1, dans lequel la commande active comporte en plus une sélection active des séparateurs libres mis à disposition en vue d'une alimentation prochaine en boues d'épuration provenant du secteur anaérobie dans le cas de plusieurs séparateurs.

3. Procédé selon l'une des revendications 1 ou 2, **caractérisé en ce que** les boues d'épuration déposées sont transportées dans un secteur du sol dudit séparateur au moins et une couche flottante est ensuite sollicitée du bas par des matières épaisses décomposées des boues d'épuration à l'intérieur du séparateur.

4. Procédé selon l'une des revendications 1 à 3, dans lequel le microfiltre biologique est fixé aux surfaces extérieures perforées du réservoir intérieur au moyen de tamis.

5. Procédé selon l'une des revendications 1 à 4, dans lequel le microfiltre biologique est constitué de copeaux de bois.

6. Procédé selon l'une des revendications 1 à 5, **caractérisé en ce que** de l'air alimente le séparateur par le bas et/ou latéralement pour le traitement aérobie des boues d'épuration déposées.
